# EUROPÄISCHE PATENTSCHRIFT

(11) **EP 0 699 694 B1**
(45) Veröffentlichungstag und Bekanntmachung des Hinweises auf die Patenterteilung: **05.01.2000**
(21) Anmeldenummer: 95113615.9
(22) Anmeldetag: 30.08.1995
(51) Int. Cl.: C08F 290/04

(54) **Kammpolymere**
Comb polymers
Polymères en peigne

(30) Priorität: 02.09.1994 DE 4431302
(43) Veröffentlichungstag der Anmeldung: 06.03.1996
(73) Patentinhaber: Röhm GmbH, 64293 Darmstadt (DE)
(72) Erfinder: Auschre, Clemens, Dr., D-55122 Mainz (DE); Omeis, Jürgen, Dr., D-64404 Bickenbach (DE); Pennewiss, Horst, Dr., D-64289 Darmstadt (DE)

(56) Entgegenhaltungen:
- EP-A- 0 522 376
- EP-A- 0 621 293
- WO-A-92/15628
- WO-A-95/02003
- US-A- 4 085 168
- US-A- 4 818 804
- US-A- 5 254 632

## Beschreibung

### Gebiet der Erfindung

Die Erfindung betrifft Kammpolymere herstellbar aus Makromonomeren mit endständiger Doppelbindung.

### Stand der Technik

Zur Synthese funktioneller Oligomerer und insbesondere von telechelen Oligomeren mit enger Molmassenverteilung wird im Schrifttum die anionische Oligomerisation empfohlen. Für die Monomeren Styrol, 1,3-Butadien und Isopren ist die Herstellung von α,ω-bifunktionellen Oligomeren durch Initiierung mit bifunktionellen Initiatoren und Abbruch mit geeigneten Reagentien beschrieben. Die sogenannten Makromonomeren eignen sich für eine Reihe interessanter Anwendungen, u.a. als Ausgangsverbindungen für die Herstellung von Kammpolymeren. (Vgl. Houben-Weyl, Methoden der Organischen Chemie, 4. Aufl. Bd. E20, 647 - 648, 1166-1167, Georg Thieme 1987; P.F. Rempp, E. Franta Adv. Polym. Sci. 58, 1 - 3 (1984), H.F. Mark et al. Encyclopedia of Polymer Science & Technology, 2nd. Ed., Vol. 9, 195 - 204, J. Wiley 1987). In der europäischen Patentanmeldung 0621293 A1 werden Kammpolymere hergestellt durch radikalische Copolymerisation von Olefin-Copolymer-Makromonomeren der Formel 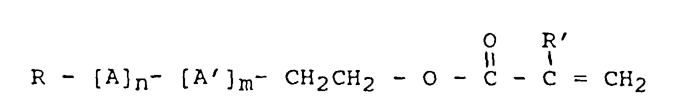 worin
- R': für Wasserstoff oder Methyl
- R: für den organischen Rest einer lithium-organischen Verbindung
- [A]: für ein Segment gebildet durch 1,4-Addition von gegebenenfalls mit einem C₁-C₆-Alkylrest substituierten Butadien
- [A']: für ein Segment gebildet durch Vinyladdition von gegebenenfalls mit einem C₁-C₆-Alkylrest substituierten Butadien
und n + m für eine ganze Zahl von 10 bis 3000 steht,
mit (Meth)acrylsäureestern von C₁-C₂₆-Alkanolen. R stammt dabei aus dem bei der anionischen Polymerisation verwendeten, lithium-organischen Katalysator und steht vorzugsweise für einen Butyl- oder einen Phenylrest.

In der amerikansichen Patentschrift US-A 5 254 632 wird ein Verfahren zur Herstellung von Makromonomeren beschrieben, bei dem monomere Ester der (Meth)acrylsäure mit einem Alkylrest mit 1 - 8 Kohlenstoffatomen mit einem Hydroxylgruppen-terminierten Polyalkylmethacrylat unter Abspaltung des Alkylalkohols mit 1 - 8 Kohlenstoffatomen umgeestert werden. Durch radikalisch Polymerisation der Makromonomeren mit weiteren (Meth)acrylestern können Kammpolymere hergestellt werden.

### Aufgabe und Lösung

Kammpolymere bestehend aus einer Polyalkyl(meth)acrylathauptkette und hochmolekularen Kohlenwasserstoffseitenketten zeigen neben anderen technisch interessierenden Eigenschaften ein außergewöhnliches Lösungsverhalten. Diese Eigenschaften lassen sich, wie z.B. in der vorstehend genannten europ. Patentanmeldung beschrieben, in vorteilhafter Weise als Viskositätsindexverbesserer (VII) im Schmierstoffbereich zur Geltung bringen (vgl. Ullmann's Encyclopedia of Industrial Chemistry, 5th Ed. Vol. A15, 448 - 449, VCH 1990).
Die Makromonomere, die in der europ. Patentanmeldung als Ausgangsprodukte für die Kammpolymere dienen, werden auf Dienbasis hergestellt. Die Synthese über die Dien-Route schließt neben der Polymerisation und Funktionalisierung eine zusätzliche Hydrierungsstufe ein. Dieser Darstellungsweise gegenüber wäre eine direkte Herstellung von gesättigten Olefincopolymeren mit einer reaktiven Endgruppe vorzuziehen. Zur Lösung der vorliegenden Aufgabe, d.h. der direkten Herstellung von Makromonomeren bestehend aus gesättigten Olefincopolymeren mit reaktiven Endgruppen bedient man sich mit Vorteil der Katalyse mit Metallocenkatalysatoren (vgl. R. Mühlhaupt, Nachrichten aus Chemie und Technik, 41, 1341 (1993).
Die Erfindung betrifft somit Kammpolymere KP herstellbar ausgehend von Makromonomeren der Formel I 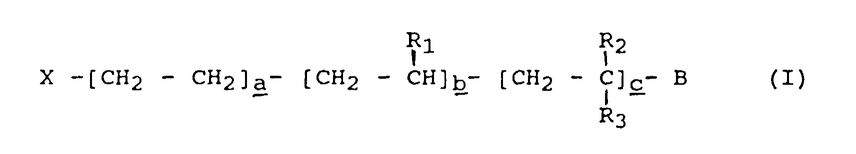 worin
- X: ein aus dem Initiatorensystem stammender Rest, vorzugsweise ein Alkylrest mit 1 bis 50 Kohlenstoffatomen
- R₁: für einen Alkylrest mit 1 bis 18 Kohlenstoffatomen, vorzugsweise mit 1 - 10 Kohlenstoffatomen insbesondere mit 1 - 4 Kohlenstoffatomen
- R₂ und R₃: für einen Alkylrest mit 1 bis 8 Kohlenstoffatomen und
- B: für eine Alkenendgruppe mit mindestens 2 und bis zu 12 Kohlenstoffatomen,
vorzugsweise ausgewählt aus der Gruppe bestehend aus (B1) - HC = CH₂ ; 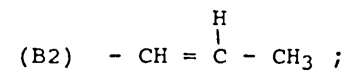 (B3) - CH = C(CH₃)₂ ; (B4) - (CH₃)C = CH₂, mit der Maßgabe, daß
(1) die Kennzahl a für einen molaren Anteil von 0 Mol.-% der Monomeren im Makromonomer der Formel (I) steht, wenn die Kennzahl c einen molaren Anteil von größer als 0 Mol.-% bedeutet
(2) die Summe der Kennzahlen a plus b 100 Mol.-% der Monomeren im Makromonomer der Formel (I) bedeutet, wobei a höchstens 80 Mol.-% bedeuten soll, oder
(3) die Summe aus b plus c 100 Mol.-% der Monomeren im Makromonomer der Formel (I) bedeuten soll,
(4) wenn a für Null steht, R₁ in R₁' übergeht, wobei R₁' einen Alkylrest mit 2 bis 18, vorzugsweise 2 bis 10, insbesondere mit 2 bis 4 Kohlenstoffatomen bedeutet,
wobei die Verbindung der Formel I in an sich bekannter Weise in eine endständig protisch substituierte Verbindung der Formel II überführt wird 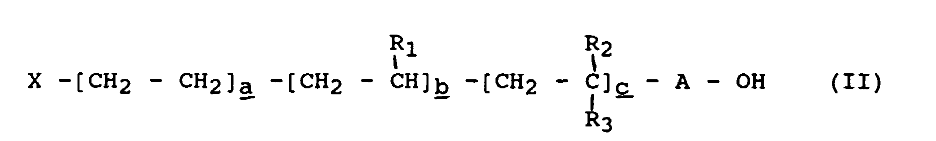 worin X, R₁, R₂, R₃, a, b und c die oben bezeichneten Bedeutungen besitzen und A die infolge der Einführung der protischen Funktionen modifizierte Gruppe B bedeutet, die durch Acylierung mittels eines den Methacryloylrest übertragenden Reagenzes MR zum Makromonomeren der Formel IV 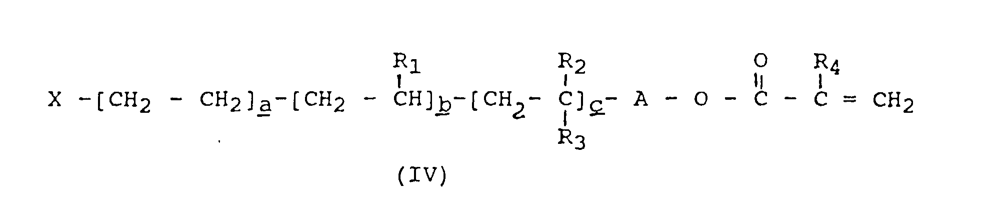 worin X, R₁, R₂, R₃, A, a, b und c die oben bezeichneten Bedeutungen besitzen und R₄ für Wasserstoff oder Methyl steht, acyliert wird und die so erhaltenen Makromonomeren der Formel IV durch radikalische Copolymerisation mit Monomeren M ausgewählt aus der Gruppe bestehend aus (Meth)acrylsäureestern von C₁-C₂₈-Alkanolen, funktionalisierten, radikalisch polymerisierbaren Monomeren, Vinylestern von Fettsäuren und vinylaromatischen Monomeren zu den Kammpolymeren KP umsetzt. Die Makromonomeren der Formel I sind bis auf die Endunsättigung gesättigte Verbindungen. Die Erfindung betrifft insbesondere Kammpolymere KP herstellbar ausgehend von den Makromonomeren der Formel I, die man mittels eines hydroxylgruppenübertragenden Reagenzes der Formel III

Q - R - OH III

worin
- Q: für eine an die Doppelbindung von B in der Formel I addierende Funktion und R für einen abstandhaltenden inerten organischen Rest mit mindestens 2 und bis 16 Kohlenstoffatomen steht,
in die Verbindungen der Formel II-A 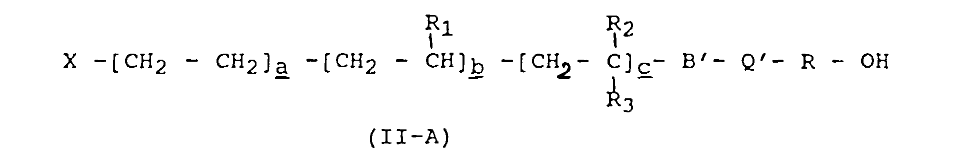 worin X, R₁, R₂, R₃, a, b, c die oben bezeichneten Bedeutungen besitzen und -B'-Q'- für eine durch Anlagerung von Q an B unter Aufhebung der Doppelbindung gebildete Einheit steht,
überführt,
gefolgt von der Acylierung mittels eines, den (Meth)acryloylrest übertragenden Reagenzes MR zum Makromonomeren der Formel IV-A 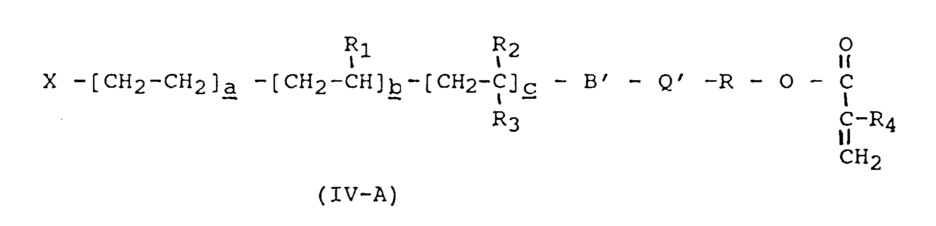 worin X, R₁, R₂, R₃, a, b, c, B', Q' und R die oben bezeichneten Bedeutungen besitzen und
worin R₄ für Wasserstoff oder Methyl steht
und die so erhaltenen Makromonomeren der Formel IV durch radikalische Copolymerisation mit Monomeren M ausgewählt aus der Gruppe bestehend aus (Meth)acrylsäureestern von C₁-C₂₈-Alkanolen, funktionalisierten, radikalisch polymerisierbaren Monomeren, Vinylestern von Fettsäuren und vinylaromatischen Monomeren wie Styrol und dessen C₁-C₄-Alkylderivaten zu den Kammpolymeren KP umsetzt. Das Gewichtsverhältnis Makromonomer IV zu Monomer M liegt im Bereich 2 zu 98 bis 100 zu 0. In der Regel liegt der Anteil der (Meth)acrylsäurederivaten an den Monomeren M bei mindestens 60 und bis 100 Gew.-%, insbesondere bei ≥ 75 Gew.-%, speziell bei ≥ 95 Gew.-%.

Vorzugsweise sind die Monomeren M ausgewählt aus der Gruppe bestehend aus den (Meth)acrylverbindungen der Formel V 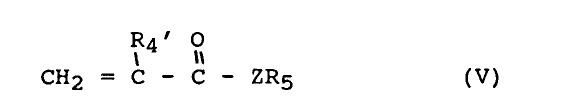 worin
- R₄': für Wasserstoff oder Methyl und
- R₅: für einen Alkylrest mit 1 bis 24 Kohlenstoffatomen, insbesondere 4 bis 24 Kohlenstoffatomen
- Z: für Sauerstoff oder einen Rest NR₇ worin R₇ für Wasserstoff oder für einen Alkylrest mit 1 bis 6 Kohlenstoffatomen steht
und zu 0 bis 75 Gew.-%, insbesondere 0,5 bis 50 Gew.-%, speziell 2 bis 15 Gew.-% bezogen auf die Gesamtheit der Monomeren M an funktionalisierten Monomeren der Formel VI 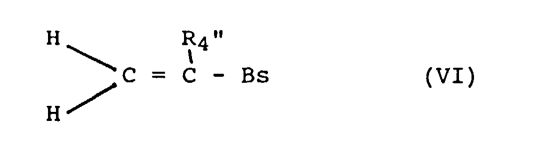 worin R₄'' Wasserstoff oder Methyl und Bs einen (inerten) heterocyclischen 5- oder 6-gliedrigen Ring oder einen Rest 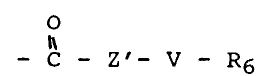 bedeutet, wobei Z' für Sauerstoff oder einen Rest -NR₇' und V für eine gegebenenfalls alkylierte Kohlenwasserstoffbrücke mit insgesamt 2 bis 50 Kohlenstoffatomen, die durch Sauerstoffbrücken unterbrochen sein kann, vorzugsweise 2 bis (q-1) O-Brückengliedern, wobei q für die Zahl der Brücken-Kohlenstoffatome in der Kette steht und R₆ für -OR₇' oder -NR₈R₉ steht, worin R₇'

Wasserstoff oder einen Alkylrest mit 1 bis 24, vorzugsweise 8 bis 22 Kohlenstoffatomen bedeuten oder alkylsubstituierte Alkylreste, insbesondere Phenylreste mit C₁-C₁₈-Alkylsubstituenten, vorzugsweise mit C₆-C₁₆-Alkylsubstituenten und worin R₈ und R₉ jeweils für einen Alkylrest mit 1 bis 6 Kohlenstoffatomen stehen oder zusammen unter Einbeziehung des Stickstoffs und gegebenenfalls anderer Heteroatome einen heterocyclischen 5- oder 6-gliedrigen Ring bilden können. R₇' steht insbesondere für Wasserstoff oder einen Alkylrest mit 1 bis 6 Kohlenstoffatomen und vorzugsweise zu 0 bis 80 Gew.-%, insbesondere 5 bis 20 Gew-% bezogen auf die Gesamtheit der Monomeren M an Vinylestern der Formel VII 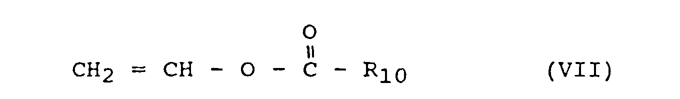 worin R₁₀ für einen gegebenenfalls verzweigten Alkylrest mit 1 bis 13 Kohlenstoffatomen steht und
vorzugsweise zu 0 bis 60 Gew.-%, insbesondere 0,5 bis 40 Gew.-% bezogen auf die Gesamtheit der Monomeren M an Vinylaromaten der Formel VIII 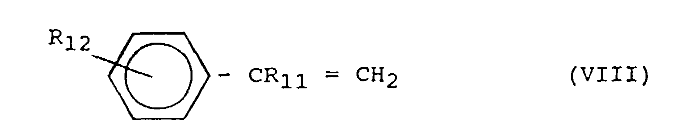 worin R₁₁ und R₁₂ für Wasserstoff oder für einen Alkylrest mit 1 bis 4 Kohlenstoffatomen steht.

Die Monomerkomponenten von M ergänzen sich üblicherweise zu 100 Gew.-%. Diese Monomeren können insgesamt als bekannt gelten. Für bestimmte Anwendungsbereiche sind stickstofffreie Kammpolymere bevorzugt.
Neben (Meth)acrylsäureester der Formel V mit 1 - 6 C-Atomen (insbesondere in Form von Gemischen) kommen vorzugsweise solche in denen R₅ für C₆-C₂₄ steht in Anteilen von 40 bis 100, insbesondere 80 - 100 Gew.-Teilen bezogen auf die Gesamtheit der Monomeren der Formel V zur Anwendung mit Alkylresten, insbesondere aus dem Bereich C₉ bis C₂₀, vor allem C₁₀ bis C₁₈ mit wechselnden Verzweigungsgraden im Bereich 25 bis über 80 %, z.B. solche, die aus den großtechnischen Herstellungsverfahren, wie der Oxosynthese anfallen, in Betracht.
Genannt seien z.B. das Handelsprodukt LINCOL® der Fa. Condea, die Ester der sogenannten DOBANOL ®-Alkohole (Produkte der Fa. Shell), der sogenannten ALFOL ®-Alkohole (Produkte der Fa. Condea), der sogenannten LOROL®-Alkohole, der Talgfettalkohole u.ä.. Von besonderem Interesse sind z.B. Ester von Alkoholgemischen aus isomeren Isodecylalkoholen, Estern von Alkoholgemischen aus isomeren Isoundecylalkoholen, ferner Ester eines Alkoholgemischs mit Durchschnitts-C-Zahl 13,2 - 13,8 und einem überwiegenden Gehalt an C₁₂-C₁₅-Alkoholen (DOBANOL ® 25 L). Gut brauchbar sind auch die Ester von cyclischen Alkanolen z.B. mit 5 bis 8 Ringkohlenstoffatomen, wie z.B. von Cyclopentanol, Cyclohexanol, Cyclooctanol, Benzylalkohol, alkylsubstituierte Cyclohexanole wie z.B. 4-tert.-Butylcyclohexanol.
Genannt seien darüber hinaus:
Methyl(meth)acrylat, Ethyl(meth)acrylat, Butyl(meth)acrylat, Ethylhexyl(meth)acrylat, Octyl(meth)acrylat, Dodecyl(meth)acrylat, Hexadecyl(meth)acrylat, Eicosyl(meth)acrylat, desweiteren Verbindungen der Formel V worin Z für NR₇ steht, z.B. (Meth)acrylamid, N-Methyl(meth)acrylamid, N,N-Dimethyl(meth)acrylamid, N-t-Butyl(meth)acrylamid. Herausgestellt seien z.B. Copolymerisate mit Methylmethacrylat, 2-Dimethylaminoethylmethacrylat und Butylacrylat als Monomere M, ferner solche mit 2-(4-Morpholinyl)ethylmethacrylat, N-Dimethylaminopropylmethacrylamid als Monomeren der Formel VI.

In gewissen Anteilen beispielsweise bis zu 20 Gew.-Teile bezogen auf die Monomeren der Formel V kann R₅ auch durch einen aromatischen oder einen cyclischen Rest, insbesondere einen Phenyl-, Naphthyl- oder Benzylrest ersetzt sein, der beispielsweise durch eine C₁-C₄-Alkylgruppe durch Fluor oder durch einen Rest analog R₆ substituiert sein kann.
Genannt seien als Vertreter z.B. Phenyl(meth)acrylat, 1-Phenylethyl(meth)acrylat, Benzyl(meth)acrylat, N-Phenyl(meth)acrylamid, N-Benzyl(meth)acrylamid, 4-Hydroxyphenyl-Naphtyl(meth)acrylat, Naphthyl(meth)acrylat, 9-Fluorenyl(meth)-acrylat sowie Pentafluorphenyl(meth)acrylat.
Beispielhaft für Cycloalkyl(meth)acrylat-Verbindungen werden angeführt: Cyclopentyl(meth)acrylat, CyclohexylNaphtyl(meth)acrylat, Cyclooctyl(meth)acrylat, 3,3,5-Trimethylcyclohexyl(meth)acrylat, 3-Cyclohexylpropyl(meth)acrylat, N-Cyclohexyl(meth)acrylamid, 4-Hydroxycyclohexyl(meth)acrylat oder 4-Fluorcyclohexyl(meth)acrylat.

Als Monomere der Formel VI seien einerseits heterocyclische Vinylverbindungen, insbesondere Vinyllactame, Vinylimidazole, Vinylpyridine, Vinylcarbazole genannt (vgl. DE-A 26 34 033). Erwähnt sei insbesondere N-Vinyl-2-pyrrolidon.
Unter anderen Heteroatomen seien in Formel VI neben Stickstoff Sauerstoff und/oder Schwefel verstanden. Von besonderer Bedeutung sind indessen die von Formel VI umfaßten funktionalisierten (Meth)acrylester und -amide, insbesondere solche, die mindestens eine Etherbrücke enthalten, insbesondere solche mit höherem Alkoxylierungsgrad.
Als Verbindungen dieses Typs kommen z.B. die (Meth)acrylsäureester von alkoxylierten aliphatischen Alkoholen, wie z.B. alkoxyliertem Butanol und weitere alkoxylierte Alkohole ausgehend von: Methanol, Ethanol, Propanol, Pentanol (+ Isomere), Hexanol (+ Isomere), Cyclohexanol, Methylcyclohexanol, 2-Ethylhexanol und höheren aliphatischen einwertigen Alkoholen wie Isodecylalkohol, Isoundecylalkohol, Isotridecylalkohol aus natürlichen Rohstoffen hergestellte Fettalkohole usw. infrage. Desweiteren kommen infrage: alkoxylierte Phenole, z.B. basierend auf: Phenol, alkylsubstituierten Phenolen, z.B. t-Butylphenol, 2,6-Dimethylphenol, isomere Gemische, techn. Alkylphenole, z.B. Octylphenol, Nonylphenol, Dinonylphenol, Naphthol, alkylsubstituierte Naphthole, weiter kommen infrage EO/PO-Anlagerungsprodukte an substituierte Alkohole, z.B.: Furfurol, Tetrahydrofurfurol, 2-Methoxybutanol, 3-Methoxybutanol, 2-Dimethylaminoethanol, 2-Diethylaminoethanol, 1-Dimethylamino-2-propanol, 3-Dimethylamino-1-propanol, 2-Morpholinoethanol, 2-(2-Pyridyl)ethanol, N-(2-Hydroxyethyl)-piperidin, N-(2-Hydroxyethyl)pyrrolidon.

Von speziellem Interesse sind Alkohole, die ein (statistisches) Anlagerungsprodukt von Ethylenoxid und Propylenoxid an einem Alkohol wie z.B. Butanol darstellen. Genannt seien speziell die (Meth)acrylsäureester ethoxylierter Fettalkoholgemische, z.B. die Ester von C₁₆₋₁₈ -Fettalkoholgemischen mit Ethoxylierungsgraden im Bereich 11 - 50.
Als Anhalt für das Molekulargewicht von bevorzugten Monomeren mit einem höheren Alkoxylierungsgrad sei der Bereich um ca. 2 000 g/mol [Dalton] angegeben. Dies stellt jedoch keine Limitierung dar. Je nach Alkoxylierungsgrad und je nach Größe des Restes R₂ können auch höhere Molekulargewichte bis ca. 5 000 g/mol [Dalton] erreicht werden. Die Monomeren der Formel V können selbst als Mischung, bestehend aus Methacrylaten der verschiedenen oben beschriebenen alkoxylierten Alkohole, vorliegen.
Desweiteren sind von Interesse mindestens einfach hydroxylgruppen-subsitituierte Alkylester mit 2 - 50 Kohlenstoffatomen im Alkylrest wie z.B. 2-Hydroxyethyl(meth)acrylat, 2- und 3-Hydroxypropyl(meth)acrylat, 4-Hydroxybutyl(meth)acrylat oder Amide wie N-(2-Hydroxyethyl)methacrylamid, N-(3-Hydroxy-2,2-dimethylpropyl)methacrylamid.
Ferner (Meth)acrylsäureester von Aminoalkoholen wie Diethylaminoethyl(meth)acrylat, 2-(Dimethylamino)propyl(meth)acrylat, 3-Dimethylamino-2,2-dimethylpropyl(meth)acrylat, 2-tert.Butylaminoethyl(meth)acrylat, 2-(Dimethylamino)ethoxyethyl(meth)acrylat und die entsprechenden Amide wie: N-Dimethylaminomethyl(meth)acrylamid, N-(3-Dimethylaminopropyl(meth)acrylamid, N-(1-Piperidinylmethyl) (meth)acrylamid; N-(3-Morpholinopropyl)methacrylamid, 2-(1-Imidazolyl)ethyl(meth)acrylat sowie N-Methylacryloylpyrrolidon-2 u.ä..
Als Monomere der Formel VII kommen insbesondere Vinylacetat und Vinylpropionat infrage.
Als Monomere der Formel VIII sind neben Styrol, α-Methylstyrol und p-Methylstyrol zu nennen.
Die Herstellung der Makromonomeren der Formel I aus den hydroxylgruppen-haltigen Verbindungen der Formel II mittels des den (Meth)acryloylrest übertragenden Reagenzes MR erfolgt analog bekannter Acylierungen. So kann MR beispielsweise ein (Meth)acrylsäureanhydrid, (Meth)acrylsäurehalogenid, insbesondere das Chlorid sein. Vorzugsweise erfolgt jedoch die Acylierung durch Umesterung mit (Meth)acrylsäureestern niederer Alkohole, insbesondere der C₁-C₄-Alkohole, vorzugsweise mit Methyl(meth)acrylat. Die Umesterung kann säuren- oder basenkatalysiert sein. Besonders bewährt hat sich beispielsweise die Umesterung mit Ortho-Titanaten, wie z.B. dem Isopropyltitanat in Mengen von - als Anhalt -0,1 Gew.-% bis 1 Gew.-% bezogen auf den Alkohol, bei erhöhter Temperatur, beispielsweise der Siedetemperatur des - auch als Lösemittel dienenden - niederen (Meth)acrylsäureesters (vgl. US-A 5 254 632).
Von technischem Interesse ist auch die Umesterung mit einer Kombination aus einer Lithiumverbindung, beispielsweise Lithiumhydroxid und Calciumoxid. In jedem Fall empfiehlt sich die Mitverwendung von Polymerisationsinhibitoren, z.B. sterisch gehinderten Phenolen, wie 4-Methyl-2,6-di-tert.butylphenol. (Vgl. Ullmann's Encyclopedia of Industrial Chemistry, 5th Ed. Vol. A20, pg. 461 - 475, VCH 1992).
Desweiteren kann die Veresterung auch mit der freien (Meth)acrylsäure nach der Dicyclohexylcarbondiimid-("DCC")-Methode durchgeführt werden, insbesondere wenn die Endgruppe B'- Q'-ROH in Formel II-A aus der Anlagerung von Maleinsäureanhydrid und nachfolgende Imidierung mit einem Alkanolamin hervorgegangen ist. [Z. Methode vgl. Y. Guanon, P. Rempp, Makrom. Chem. 188, 2111 - 2119 (1987)]. Die Herstellung der hydroxylgruppenhaltigen Verbindungen der Formeln II bzw. II-A aus den Makromonomeren der Formel I kann in verschiedener Weise erfolgen. Von besonderem technischen Interesse ist die direkte Herstellung durch Hydroformylierung. Die Herstellung kann beispielsweise auch durch Reaktion mit einem Reagenz der Formel III, worin Q für eine Thiolgruppe, und B für einen Alkylrest mit 2 - 8 Kohlenstoffatomen steht, insbesondere einem α,ω-Thioalkohol wie z.B. Thioethanol, Thiopropanol, Thiobutanol, vorgenommen werden.
Eine weitere Möglichkeit der Überführung der Verbindungen der Formel I in die hydroxylgruppenhaltigen Verbindungen der Formel II besteht in einer Umsetzung (EN-Reaktion) der ersteren mit Maleinsäureanhydrid gefolgt von anschließender Imidisierung mit einem α,ω-Aminoalkohol, beispielsweise Ethanolamin.
Die Umsetzung kann dabei vorteilhaft wie folgt durchgeführt werden. Die Verbindung der Formel I wird mit Maleinsäureanhydrid in Substanz im Molverhältnis 1 : 2,5 bei ca. 200 Grad C unter Stickstoff ca. 12 Stunden gerührt. Dann wird vorzugsweise im Vakuum (ca. 20 mbar) überschüssiges Maleinsäureanhydrid bei ca. 160 Grad C abdestilliert.

Die Imidisierung des Maleinsäureanhydrid-Addukts mit dem α,ω-Aminoalkohol, beispielsweise Ethanolamin wird vorteilhaft im Molverhältnis 1 : 3 und wiederum in Substanz vorgenommen. Man homogenisiert den Ansatz bei ca. 100 Grad C, erhitzt dann ca. 3 Stunden lang auf 160 Grad C und destilliert anschließend bei 160 Grad C < 5 mbar das überschüssige Ethanolamin ab (ca. 4 Stunden). Die Acylierung übernimmt in diesem Fall vorteilhaft die Kombination aus (Meth)acrylsäure und DCC (als Reagenz MR). Dabei werden beispielsweise das imidisierte Maleinsäureanhydrid-Addukt als Verbindung der Formel II-A, die (Meth)acrylsäure zusammen mit einer (organ.) Base wie z.B. dem 4-Dimethylaminopyridin und Dicyclohexylcarbodiimid im molaren Verhältnis 1 : 1,2 : 1,4 : 1,2 unter Zusatz eines Polymerisationsinhibitors wie z.B. 200 ppm 4-Methyl-2,6-di-tert.butylphenol, 10 %ig in einem geeigneten, inerten Lösungsmittel , wie z.B. Dichlormethan innerhalb eines längeren Zeitraums wie z.B. 72 Stunden verestert. Der entstehende Dicyclohexylharnstoff soll im Lösungsmittel möglichst unlöslich sein, um per Filtration entfernt werden zu können. Die Aufreinigung kann beispielsweise mit Hilfe der Säulenchromatographie (Kieselgel-60-Säule) erfolgen. Das Molekulargewicht (Mn) der Makromonomeren der Formel IV liegt im Bereich 500 - 50 000 g/mol, insbesondere bei 1 000 -20 000 g/mol (Bestimmung durch Size Exclusion Chromatographie (SEC), vgl. Ullmann's Encyclopedia of Industrial Chemistry, 5th Ed. Vol. A20, 520 - 533, VCH 1992). Die Herstellung der erfindungsgemäßen Kammpolymeren KP kann durch radikalische Polymerisation der Monomeren M in Gegenwart der Makromonomeren der Formel IV bw. IV-A erfolgen (vgl. H.Rauch-Puntigam, Th. Völker, Acryl- und Methacrylverbindungen, Springer-Verlag 1968).

Kleinere Ansätze können z.B. im Schlenk-Gefäß durchgeführt werden, bei größeren Ansätzen verwendet man einen Reaktor mit Rührwerk, Gaseinleitungsvorrichtung und Heizung. Man löst das Makromonomer der Formel IV und das Monomer M der Formeln V - VIII in einem geeigneten inerten Lösungsmittel L, wie beispielsweise in Toluol, Xylol, so daß etwa 50 %ige Lösungen vorliegen. Bei einem typischen Ansatz setzt man die Monomerkomponenten im Gewichtsverhältnis 1 : 1 ein. Durch Zugabe von Trockeneis bzw. etwa zehnminütiges Einleiten von Stickstoff wird entgast. Man erwärmt zweckmäßig etwa bis zum Erreichen der Polymerisationstemperatur, beispielsweise auf 77 Grad C und gibt den Initiator zu, beispielsweise in einer 1 %igen Lösung im Lösemittel L. Als Initiatoren kommen an sich bekannte Initiatoren, beispielsweise Azo-Initiatoren, wie Azo-bis-isobutyronitril (AIBN) ferner Perverbindungen in den üblichen Mengen, beispielsweise 0,1 bis 1 Gew.-%, bezogen auf die Monomeren, infrage. Zweckmäßig wird noch Initiator in gewissen Abständen, beispielsweise nach 4 und nach 6 Stunden nachgefüttert. Die Gesamtpolymerisationsdauer liegt gewöhnlich im Bereich eines Tages. Die gebildeten Kammpolymeren KP weisen eine im wesentlichen aus Alkyl(meth)acrylaten der Formel V aufgebaute Hauptkette und aus den Makromonomeren der Formel IV bestehende Seitenkette auf.

Die Makromonomeren der Formel I sind durch verschiedene moderne Entwicklungen zugänglich geworden. Hervorzuheben ist z.B. die Möglichkeit endständig ungesättigte Olefinmakromonomere mittels Metallocen-Katalyse herzustellen. Als Ausgangsverbindungen eignen sich z.B. Ethylen, Propylen, u.a. α-Olefinen sowie Kombinationen.

Bevorzugt ist somit - bezugnehmend auf die vorstehende Erfindungsdefinition - die Variante des Falles (2) (= Fall 2'), worin b 100 Mol.-% bedeutet (vgl. R. Mühlhaupt, Nachr. Chem. Techn. Lab. 41, (12) 1241 - 1351, VCH (1993) oder der Fall (3') worin c 100 Mol.-% bedeutet, vorzugsweise hergestellt durch kationische Polymerisation von Isobutylen.
Genannt seien als Ausgangsverbindungen z.B. industriell erzeugte Makromonomere vom Typ "reaktives Polyisobutylen", mit reaktiven Exo-Doppelbindungen. Diese Makromonomeren lassen sich hydroformylieren wobei u.a. Makroalkohole der Formel II gebildet werden. Die Molekulargewichte liegen vorzugsweise im Bereich 1 000 bis 5 000. Desweiteren sind von Interesse Propen-Makromonomere mit endständiger Doppelbindung mit einem Molekulargewicht Mn - als Anhaltspunkt - von 800 - 5000 g/mol.

Die erfindungsgemäßen Kammpolymeren eignen sich insbesondere zur Anwendung in der Tribologie, als Schmieröladditive mit Viskositäts-Index-verbessernder Wirkung mit besonders günstigen rheologischen Eigenschaften oder als Dispersants von "Ashless"-Typ.

### BEISPIELE

Die Beispiele beschreiben Makromonomere und Kammpolymere basierend auf Makroalkoholen aus Polyisobutylen (PIB) und ataktischem Polypropylen (PP). Die Wirksamkeit der dispergierenden Kammpolymere wird mit Hilfe von Labordispergiertests demonstriert. Die Vorteile nichtdispergierender Kammpolymer-VI-Verbesserer werden im Vergleich zu konventionellen linearen PAMA-VI-Verbesserern gezeigt. Der Schwerpunkt liegt dabei auf einer verbesserten Relation Verdickung/Scherstabilität.

### Verwendete Materialien:

### Makroalkohole

Bei den Makroalkoholen handelt es sich um Produkte mit primärer OH-Gruppe, hergestellt durch Hydroformylierung und nachfolgende Hydrierung von endständig ungesättigtem PIB bzw. PP.

| Bezeichnung | Molekulargewicht Mn (Dampfdruckosmose)· | Verdickungswirkung KV100 10 Gew.-% in mineralölbasischem 150N-Meßöl |
|---|---|---|
| PIBOH-I | 2230 | 9,42 mm²/s (9,42 cSt) |
| PIBOH-II | 2950 | 10,27 mm²/s (10,27 cSt) |
| PPOH | 1440 | 8,13 mm²/s (8,13 cSt) |

Weitere verwendete Materialien:

| | |
|---|---|
| 100 N | = 100 N-Öl |
| Tempol | = 4-Hydroxy-2,2,6,6-tetramethylpiperidinoxyl |
| HME | = Hydrochinonmonomethylether |
| LiOMe | = Lithiummethanolat |
| MMA | = Methylmethacrylat |
| DMA | = i-Decylmethacrylat |
| AMA-1 | = Methacrylat eines Alkoholgemisches von C11 bis C16-Alkoholen |
| AMA-2 | = Methacrylat von Talgfettalkohol |
| BMA | = Butylmethacrylat |
| MEMA | = 2-N-Morpholinoethylmethacrylat |
| VP | = N-Vinylpyrrolidon |
| S | = Styrol |
| IN-1 | = tert.-Butylperpivalat |
| IN-2 | = tert.-Butylper-2-ethylhexanoat |
| IN-3 | = tert.-Butylperisononanoat |

Herstellung der Makromonomere durch Umesterung der Makroalkohole PIB-OH bzw. PP-OH:

### Beispiel 1: Herstellung des Makromonomeren PIBMM-I (50 %ig in 100N)

### Apparatur: 4 l-Dreihalskolben mit elektrischem Heizpilz, Säbelrührer, Innenthermometer, Lufteinleitung und Destillationsaufsatz mit Füllkörperkolonne.

900 g PIBOH-I werden in 900 g 100 N-Öl durch 12-stündiges Rühren bei 100 Grad C aufgelöst; Zur abgekühlten Lösung werden danach zugegeben: 1063 g MMA, 85 mg Tempol und 340 mg HME. Nach Erwärmen zum Rückfluß unter Luftdurchleitung werden zur azeotropen Trocknung ca. 160 g MMA abdestelliert. Nach Abkühlen auf ca. 95 Grad C und Zugabe von 1,7 g LiOMe wird 3 Stunden zum Rückfluß erwärmt und danach 300 g MMA mit wenig Methanol abdestilliert. Zur weiteren Aufarbeitung wird das überschüssige MMA am Vakuum Rotationsverdampfer bei 50 Grad C und 1 mbar abgezogen. Ausbeute: 1800 g Öllösung des Makromonomeren PIBMM-1

### Beispiel 2: Herstellung des Makromonomeren PIBMM-II (50 %ig in 100N)

Apparatur und Durchführung analog Beispiel 1, jedoch unter Verwendung von 900 g des Makroalkohols PIBOH-II. Ausbeute: 1800 g Öllösung des Makromonomeren PIBMM-II

### Beispiel 3: Herstellung des Makromonomeren PPMM (50 %ig in 100N)

Apparatur und Durchführung analog Beispiel 1, jedoch unter Verwendung von 900 g des Makroalkohols PPOH. Ausbeute: 1800 g Öllösung des Makromonomeren PPMM

### Herstellung von dispergierenden Kammpolymeren:

### Beispiel 4: Herstellung eines dispergierenden Kammpolymer-VI Verbesserers KP-4

Im 200 ml Dreihalskolben mit Ölheizbad, Säbelrührer, Innenthermometer und N₂-Überleitung werden vorgelegt:
13,2 g MEMA
105,6 g PIBMM-II
1,2 g 100 N

Nach Erwärmen unter N₂ auf 75 Grad C wird eine Mischung aus 0,1 g IN-1 und 0,1 g IN-2 zugesetzt und die Temperatur der Ölbadheizung auf 95 Grad C eingestellt. 4 Stunden und 6 Stunden nach der ersten Initiatorzugabe werden jeweils 0,13 g IN-2 nachgegeben und nach der letzten Zugabe noch 6 Stunden bei 95 Grad C gehalten.
Ausbeute: 120 g Öllösung des dispergierenden Kammpolymeren KP-4 (55 %ig)

### Beispiel 5: Herstellung eines dispergierenden Kammpolymer-VI Verbesserers KP-5

In der Apparatur wie in Beispiel 4 werden vorgelegt:
9,9 g DMA
3,3 g MEMA
105,6 g PIBMM-I
1,2 g 100 N

Nach Erwärmen unter N₂ auf 75 Grad C wird eine Mischung aus 0,2 g IN-1 und 0,2 g IN-3 zugesetzt und die Temperatur der Ölbadheizung auf 105 Grad C eingestellt. 4 Stunden nach der ersten Initiatorzugabe werden 0,13 g IN-3 nachgegeben und noch 6 Stunden bei 105 Grad C gehalten.
Ausbeute: 120 g Öllösung des dispergierenden Kammpolymeren KP-5 (55 %ig)

### Beispiel 6: Herstellung eines dispergierenden Kammpolymer-VI-Verbesserers KP-6

In der Apparatur wie in Beispiel 4 werden vorgelegt:
9,9 g BMA
3,3 g MEMA
105,6 g PIBMM-I
1,2 g 100 N

Weiterer Reaktionsverlauf wie in Beispiel 5.
Ausbeute: 120 g Öllösung des dispergierenden Kammpolymeren KP-6 (55 %ig)

### Beispiel 7: Herstellung eines dispergierenden Kammpolymer-VI-Verbesserers KP-7

In der Apparatur wie in Beispiel 4 werden vorgelegt:
36,3 g AMA-1
3,3 g MEMA
52,8 g PIBMM-I
27,6 g 100 N

Nach Erwärmen unter N₂ auf 75 Grad C wird eine Mischung aus 0,2 g IN-1 und 0,2 g IN-3 zugesetzt und die Temperatur der Ölbadheizung auf 105 Grad C eingestellt, 4 Stunden nach der ersten Initiatorzugabe werden 0,13 g IN-3 nachgegeben und noch 6 Stunden bei 105 Grad C gehalten.
Ausbeute: 120 g Öllösung des dispergierenden Kammpolymeren KP-7 (55 %ig)

### Beispiel 8: Herstellung eines dispergierenden Kammpolymer-VI-Verbesserers KP-8

In der Apparatur wie in Beispiel 4 werden vorgelegt:
9,9 g AMA-1
3,3 g MEMA
105,6 g PIBMM-I
1,2 g 100 N

Nach Erwärmen unter N₂ auf 75 Grad C wird eine Mischung aus 0,10 g IN-1 und 0,10 g IN-3 zugesetzt und die Temperatur der Ölbadheizung auf 105 Grad C eingestellt. 4 Stunden und 6 Stunden nach der ersten Initiatorzugabe werden jeweils 0,13 g IN-3 nachgegeben und nach der letzten Zugabe noch 6 Stunden bei 95 Grad C gehalten.
Ausbeute: 120 g Öllösung des dispergierenden Kammpolymeren KP-8 (55 %ig)

### Beispiel 9: Herstellung eines dispergierenden Kammpolymer-VI-Verbesserers KP-9

In der Apparatur wie in Beispiel 4 werden vorgelegt:
6,6 g AMA-1
3,3 g VP
3,3 g S
105,6 g PIBMM-I
1,2 g 100 N

Nach Erwärmen unter N₂ auf 75 Grad C wird eine Mischung aus 0,2 g IN-1 und 0,2 g IN-3 zugesetzt und die Temperatur der Ölbadheizung auf 105 Grad eingestellt. 4 Stunden und 6 Stunden nach der ersten Initiatorzugabe werden jeweils 0,13 g IN-3 nachgegeben und nach der letzten Zugabe noch 6 Stunden bei 95 Grad C gehalten.
Ausbeute: 120 g Öllösung des dispergierenden Kammpolymeren KP-9 (55 %ig)

### Beispiel 10: Herstellung eines dispergierenden Kammpolymer-VI-Verbesserers KP-10

In der Apparatur wie in Beispiel 4 werden vorgelegt:
9,9 g AMA-2
3,3 g MEMA
105,6 g PIBMM-II
1,2 g 100 N

Weiterer Reaktionsverlauf wie in Beispiel 9.
Ausbeute: 120 g Öllösung des dispergierenden Kammpolymeren KP-10 (55 %ig)

### Beispiel 11: Herstellung eines dispergierenden Kammpolymer-VI-Verbesserers KP-11

In der Apparatur wie in Beispiel 4 werden vorgelegt:
6,6 g AMA-1
6,6 g MEMA
105,6 g PIBMM-II
1,2 g 100 N

Nach Erwärmen unter N₂ auf 75 Grad C wird eine Mischung aus 0,2 g IN-1 und 0,2 g IN-2 zugesetzt und die Temperatur der Ölbadheizung auf 95 Grad C eingestellt. 4 Stunden und 6 Stunden nach der ersten Initiatorzugabe werden jeweils 0,13 g IN-2 nachgegeben und nach der letzten Zugabe noch 6 Stunden bei 95 Grad C gehalten.
Ausbeute: 120 g Öllösung des dispergierenden Kammpolymeren KP-11 (55 %ig)

### Beispiel 12: Herstellung eines dispergierenden Kammpolymer-VI-Verbesserers KP-12

In der Apparatur wie in Beispiel 4 werden vorgelegt:
9,9 g AMA-1
1,65 g MEMA
1,65 g VP
105,6 g PIBMM-I
1,2 g 100 N

weiterer Reaktionsverlauf wie in Beispiel 9
Ausbeute: 120 g Öllösung des dispergierenden Kammpolymeren KP-12 (55 %ig)

### Beispiel 13: Herstellung eines dispergierenden Kammpolymer-VI-Verbesserers KP-13

In der Apparatur wie in Beispiel 4 werden vorgelegt:
9,9 g AMA-2
3,3 g MEMA
105,6 g PPMM
1,2 g 100 N
weiterer Reaktionsverlauf wie in Beispiel 9
Ausbeute: 120 g Öllösung des dispergierenden Kammpolymeren KP-13 (55 %ig)

### Beispiel 14: Herstellung eines dispergierenden Kammpolymer-VI-Verbesserers KP-14

In der Apparatur wie in Beispiel 4 werden vorgelegt:
9,9 g AMA-1
3,3 g MEMA
105,6 g PPMM
1,2 g 100 N
weiterer Reaktionsverlauf wie in Beispiel 11
Ausbeute: 120 g Öllösung des dispergierenden Kammpolymeren KP-14 (55 %ig)

### Beispiel 15: Herstellung eines Kammpolymer-VI-Verbesserers KP-15

In der Apparatur wie in Beispiel 4 werden vorgelegt:
27,9 g AMA-1
32,1 g MMA
80,0 g PIBMM-II
41,8 g 100 N

Nach Erwärmen unter N₂ auf 90 Grad C werden 0,5 g IN-1 zugesetzt und die Temperatur der Ölbadheizung auf 90 Grad C eingestellt. 4,5 Stunden und 9,5 Stunden nach der ersten Initiatorzugabe werden jeweils 0,2 g IN-1 nachgegeben.
Ausbeute: 181,8 g Öllösung des Kammpolymer-VI-Verbesserers KP-15 (55 %ig)

### Beispiel 16: Herstellung eines Kammpolymer-VI-Verbesserers KP-16

In der Apparatur wie in Beispiel 4 werden vorgelegt:
26,4 g AMA-1
26,4 g S
26,4 g PIBMM-II
14,8 g 100 N

Nach Erwärmen unter N₂ auf 75 Grad C wird eine Mischung aus 0,13 g IN-1 und 0,13 g IN-2 zugesetzt und die Temperatur der Ölbadheizung auf 95 Grad C eingestellt. 4 Stunden und 6 Stunden nach der ersten Initiatorzugabe werden jeweils 0,13 g IN-2 nachgegeben und nach der letzten Zugabe noch 6 Stunden bei 95 Grad C gehalten. Nach Polymerisationsende wird mit 26 g 100 N-Öl verdünnt.
Ausbeute: 120 g Öllösung des Kammpolymer-VI-Verbesserers KP-16 (55 %ig)

### Beispiel 17: Herstellung eines Kammpolymer-VI-Verbesserers KP-17

In der Apparatur wie in Beispiel 4 werden vorgelegt:
26,4 g AMA-1
13,2 g S
52,8 g PIBMM-II
1,6 g 100 N
weiterer Reaktionsverlauf wie in Beispiel 16
Ausbeute: 120 g Öllösung des Kammpolymer-VI-Verbesserers KP-17 (55 %ig)

### Beispiel 18: Herstellung eines Kammpolymer-VI-Verbesserers KP-18

In der Apparatur wie in Beispiel 4 werden vorgelegt:
16,5 g S
99,0 g PIBMM-II
4,5 g 100 N

Nach Erwärmen unter N₂ auf 75 Grad C wird eine Mischung aus 0,13 g IN-1 und 0,13 g IN-2 zugesetzt und die Temperatur der Ölbadheizung auf 95 Grad C eingestellt. 4 Stunden und 6 Stunden nach der ersten Initiatorzugabe werden jeweils 0,13 g IN-2 nachgegeben und nach der letzten Zugabe noch 6 Stunden bei 95 Grad C gehalten.
Ausbeute: 120 g Öllösung des Kammpolymer-VI-Verbesserers KP-18 (55 %ig)

### Beispiel 19: Herstellung eines Kammpolymer-VI-Verbesserers KP-19

In der Apparatur wie in Beispiel 4 werden vorgelegt:
26,4 g S
79,2 g PPMM
14,4 g 100 N

Nach Erwärmen unter N₂ auf 75 Grad C wird eine Mischung aus 0,13 g IN-1 und 0,13 g IN-2 zugesetzt und die Temperatur der Ölbadheizung auf 95 Grad C eingestellt. 4 Stunden und 6 Stunden nach der ersten Initiatorzugabe werden jeweils 0,13 g IN-2 nachgegeben und nach dere letzten Zugabe noch 6 Stunden bei 95 Grad C gehalten.
Ausbeute: 120 g Öllösung des Kammpolymer-VI-Verbesserers KP-19 (55 %ig)

### Beispiel 20: Herstellung eines Kammpolymer-VI-Verbesserers KP-20

In der Apparatur wie in Beispiel 4 werden vorgelegt:
13,2 g AMA-1
26,4 g S
52,8 g PIBMM-II
27,6 g 100 N

Weiterer Reaktionsverlauf wie in Beispiel 19.
Ausbeute: 120 g Öllösung des Kammpolymer-VI-Verbesserers KP-20 (55 %ig)

### Beispiel 21: Herstellung eines Kammpolymer-VI-Verbesserers KP-21

In der Apparatur wie in Beispiel 4 werden vorgelegt:
30,0 g AMA-1
30,0 g S
80,0 g PIBMM-II
41,7 g 100 N

Nach Erwärmen unter N₂ auf 90 Grad C werden 0,5 g IN-1 zugesetzt und die Temperatur der Ölbadheizung auf 90 Grad C eingestellt. 4,5 Stunden und 9,5 Stunden nach der ersten Initiatorzugabe werden jeweils 0,2 g IN-1 nachgegeben.
Ausbeute: 181,8 g Öllösung des Kammpolymer-VI-Verbesserers KP-21 (55 %ig)

### Beispiel 22: Herstellung eines Kammpolymer-VI-Verbesserers KP-22

In der Apparatur wie in Beispiel 4 werden vorgelegt:
50,0 g BMA
100,0 g PPMM
31,8 g 100 N

Nach Erwärmen unter N₂ auf 90 Grad C werden 0,7 g IN-1 zugesetzt und die Temperatur der Ölbadheizung auf 90 Grad C eingestellt. 4,5 Stunden und 9,5 Stunden nach der ersten Initiatorzugabe werden jeweils 0,2 g IN-1 nachgegeben.
Ausbeute: 181,8 g Öllösung des Kammpolymer-VI-Verbesserers KP-22 (55 %ig)

### Beispiel 23: Herstellung eines Kammpolymer-VI-Verbesserers KP-23

In der Apparatur wie in Beispiel 4 werden vorgelegt:
50,0 g BMA
100,0 g PPMM
50,0 g 100 N

Nach Erwärmen unter N₂ auf 90 Grad C werden 0,9 g IN-1 zugesetzt und die Temperatur der Ölbadheizung auf 90 Grad C eingestellt. 4,5 Stunden und 9,5 Stunden nach der ersten Initiatorzugabe werden jeweils 0,2 g IN-1 nachgegeben.
Ausbeute: 200 g Öllösung des Kammpolymer-VI-Verbesserers KP-23 (50 %ig)

### Charakterisierung der Kammpolymer-VI-Verbesserer:

Die Dispergierwirkung der Kammpolymer-VI-Verbesserer wurde mit Labortests untersucht. Mit Hilfe eines Toluol/Wasser-Emulgiertests (= T/W-Test) kann die Grenzflächenaktivität der dispergierenden VI-Verbesserer charakterisiert werden, d.h. die Fähigkeit zur Stabilisierung von Wasser in Öl-Emulsionen bzw. allgemein die Fähigkeit zur Dispergierung polarer Substanzen in unpolarem organischen Medium. Der T/W-Test dient als Modell zur Dispergierung polarer Schlämme in Motoröl.

Mit Hilfe eines Ruß-Tüpfeltests wird die Fähigkeit zur Dispergierung von unpolarem feinverteiltem Ruß in Öl getestet. Es handelt sich um ein Modell zur Rußeindickung von Ölen in Dieselmotoren.

### Durchführung des Toluol/Wasser-Emulgiertestes:

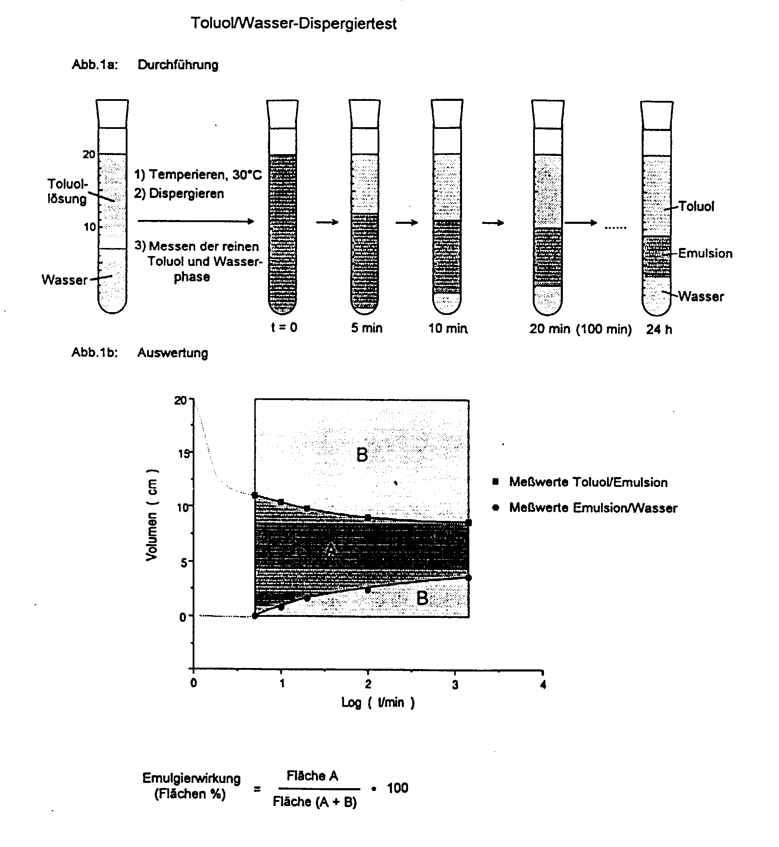

Das auf seine Emulgierwirkung zu prüfende Additiv wird in Toluol (versetzt mit 20 ppm Oracetblau B) mit einer Polymerkonzentration von 1 Gew.-% gelöst. In ein graduiertes 20 ml Schliffreagenzglas werden nacheinander 7 ml destilliertes Wasser und 13 ml der 1 %igen Toluollösung eingefüllt und 15 Minuten im Wasserbad bei 30 Grad C temperiert. Durch heftiges Schütteln des Reagenzglases wird eine gleichförmige Emulsion erzeugt und die Probe in das Temperierbad zurückgestellt. Das Auftrennen der Emulsion in die Schichten Toluol, Emulsion und Wasser wird über einen Zeitraum von 24 Stunden beobachtet. Hierzu wird zu den Zeiten 5 Minuten, 10 Minuten, 100 Minuten und 24 Stunden die Schichtgrenze Toluol/Emulsion sowie die Schichtgrenze Emulsion/Wasser anhand der Graduierung abgelesen (siehe Abb. 1a).

### Auswertung:

Die Quantifizierung der Emulgierwirkung in %-Werten erfolgt nach dem in Abb.lb gezeigten Schema. Hierbei wird der Anteil der im Boebachtungszeitraum 5 Minuten bis 24 Stunden vorliegenden Emulsion durch das Verhältnis der Fläche A zur Gesamtfläche A + B charakterisiert und in %-Werten angegeben. Gut dispergierende Polymere ergeben hierbei Werte > 20 %.

### Durchführung des Ruß-Tüpfeltestes:

Mit dem zu prüfenden Additiv werden in 150 N-Öl (Enerpar 11) zwei Stammlösungen aufgemischt: Stammlösung I mit 0,375 % Polymergehalt und Stammlösung II mit 0,75 % Polymergehalt. Von jeder Stammlösung werden 2 Rußdispersionslösungen angesetzt (Doppelbestimmung). Hierzu werden jeweils in ein 150 ml Becherglas 1,5 g Ruß (Flammruß, Degussa Spezialschwarz 4) und 50 g Stammlösung eingewogen und danach mit einem Ultra-Turrax Intensivrührer 30 Minuten bei 9000 U/min aufgerührt. Danach werden von jeder Dispersionslösung 20 µl auf Filterpapier (Papier Durieux 122) getüpfelt. Nach 48 Stunden ebener Lagerung bei 30 Grad C werden die Tüpfelflecken ausgewertet. Hierzu wird der Durchmesser des Rußfleckens und der Durchmesser des ihn umgebenden Ölfleckens ausgemessen und deren Verhältnis in % angegeben:

### Einzelbewertung = 0̸ Rußfleck/ 0̸ Ölfleck · 100 %

Die Gesamtbewertung des Tüpfeltests ergibt sich als Summe der vier prozentualen Einzelbewertungen. Produkte mit schlechter Rußdispergierung ergeben Gesamtbewertungen von ca. 70 % und niedriger, Produkte mit guter Rußdispergierung ergeben Gesamtbewertungen von ≥ 130 %.

### Wirksamkeit der dispergierenden Kammpolymer-VI-Verbesserer

Tabelle I gibt die chemische Zusammensetzung und Viskositätsdaten der dispergierenden Kammpolymer-VI-Verbesserer KP-4 bis KP-14, sowie deren Bewertung nach den Labordispergiertests. Alle Produkte zeigen gute Wirksamkeit im Rußtüpfeltest und besitzen somit die Fähigkeit zur Stabilisierung von feinverteiltem Ruß. Speziell zur Anwendung in Dieselmotorenölen ist von diesen dispergierenden Kammpolymeren eine gute Beherrschung der Rußeindickung zu erwarten.

Die dispergierenden Kammpolymere KP-4, KP-8, KP-10 und KP-11 zeigen darüber hinaus auch eine hohe Grenzflächenaktivität gemäß dem T/W-Test und sollten deshalb auch gut geeignet sein zur Dispergierung von polaren Motorölschlämmen.

### Wirksamkeit der nichtdispergierenden Kammpolymer-VI-Verbesserer

Tabelle 2 gibt die chemische Zusammensetzung, Viskositätsdaten und Scherstabilitäten der Kammpolymer-VI-Verbesserer KP-15 bis KP-23, sowie einen Vergleich mit gängigen konventionellen VI-Verbesserern auf der Basis linearer PMMA. Bei gleicher Verdickungswirkung KV100 zeigen die Kammpolymer-VI-Verbesserer eine höhere Scherstabilität, d.h. einen niedrigeren PSSI als die linearen PAMA. Beim Vergleich von Produkten mit vergleichbarem PSSI zeigen die Kammpolymer-VI-Verbesserer eine höhere Verdickungswirkung und damit für die Anwendung gegenüber linearem PAMA-VI-Verbesserern einen Polymerisateinspareffekt. Die Kammpolymer-VI-Verbesserer zeigen desweiteren z.T. deutlich höhere VI-Werte, wie am Vergleich von KP-22 mit den PAMA-VI-Verbesserern I, II und III ersichtlich wird.

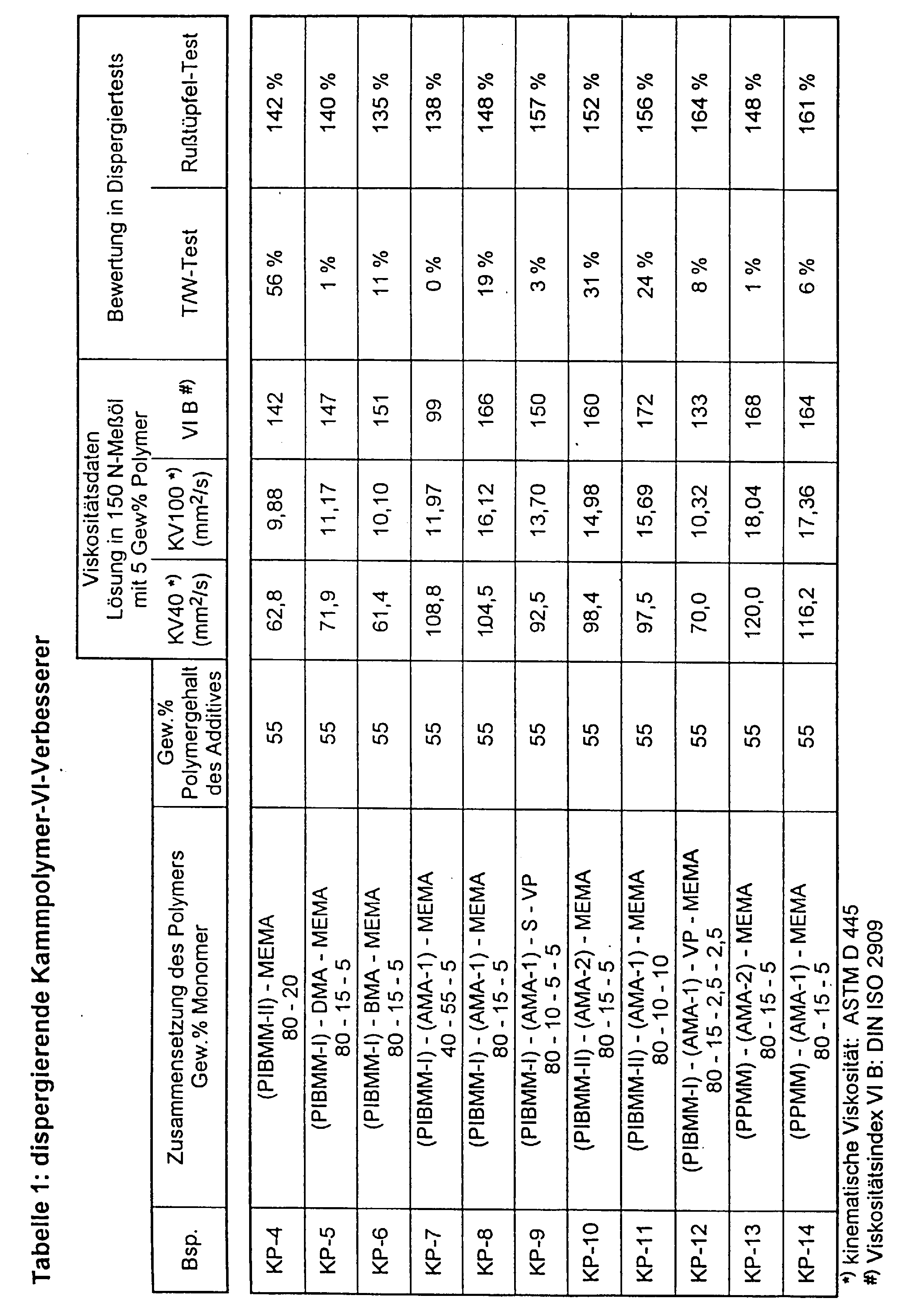

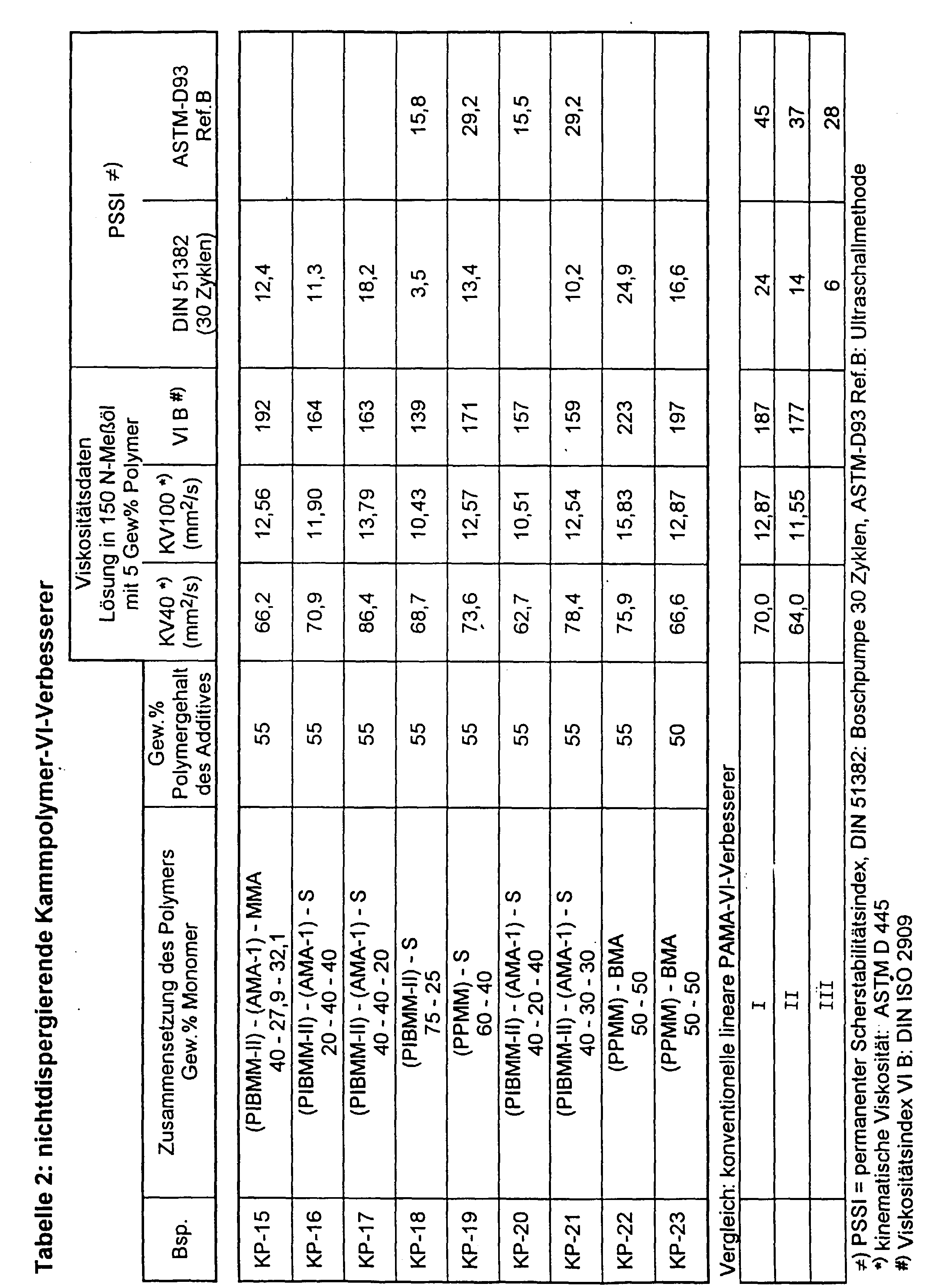

## Patentansprüche

1. Kammpolymere KP herstellbar ausgehend von Makromonomeren der Formel I 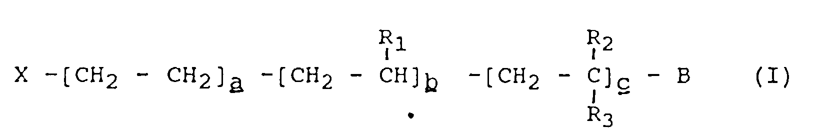 worin
X ein aus dem Initiatorsystem stammender Rest ist,
R₁ für einen Alkylrest mit 1 bis 18 Kohlenstoffatomen,
R₂ und R₃ für einen Alkylrest mit 1 bis 8 Kohlenstoffatomen und
B für eine Alkenendgruppe mit mindestens 2 und bis zu 12 Kohlenstoffatomen steht,
mit der Maßgabe, daß
(1) die Kennzahl a für einen molaren Anteil von 0 Mol.-% der Monomeren im Makromonomer der Formel (I) steht, wenn die Kennzahl c einen molaren Anteil von größer als 0 mol.-% bedeutet.
(2) die Summe der Kennzahlen a plus b 100 Mol.-% der Monomeren im Makrpmonomer der Formel (I) bedeutet, wobei a höchstens 80 Mol.-% bedeuten soll, oder
(3) die Summe aus b plus c 100 Mol.-% der Monomeren im Makromonomer der Formel (I) bedeuten soll,
(4) wenn a für Null steht, R₁ in R₁' übergeht, wobei R₁' einen Alkylrest mit 2 bis 18 Kohlenstoffatomen bedeutet.
wobei die Verbindung der Formel I in an sich bekannter Weise in eine endständig protisch substituierte Verbindung der Formel II überführt wird 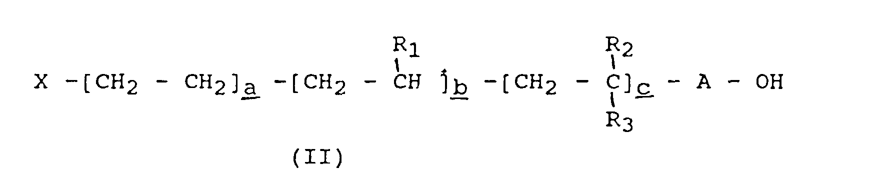 worin X, R₁, R₂, R₃, a, b und c die oben bezeichneten Bedeutungen besitzen und A die infolge der Einführung der protischen Funktionen modifizierte Gruppe B bedeutet, die durch Acylierung mittels eines den Methacryloylrest übertragenden Reagenzes MR zum Makromonomeren der Formel IV 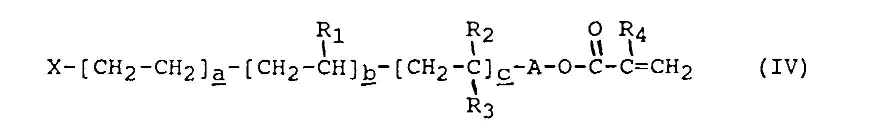 worin X, R₁, R₂, R₃, A, a, b und c die oben bezeichneten Bedeutungen besitzen und R₄ für Wasserstoff oder Methyl steht, acyliert wird und die so erhaltenen Makromonomeren der Formel IV durch radikalische Copolymerisation mit Monomeren M ausgewählt aus der Gruppe bestehend aus (Meth)acrylsäureestern von C₁-C₂₈-Alkanolen, funktionalisierten, radikalisch polymerisierbaren Monomeren, Vinylestern von Fettsäuren und vinylaromatischen Monomeren zu den Kammpolymeren KP umsetzt, wobei des Gewichtsverhältnis Makromonomer IV zu Monomer M im Bereich 2 zu 98 bis 100 zu 0 und das Molekulargewicht (Mn) der Makromonomeren der Formel IV bei Bestimmung durch Size Exclusion Chromatographie (SEC) im Bereich 500-50000 g/mol liegt.

2. Kammpolymere KP gemäß Anspruch 1, worin X ein Alkylrest mit 1 bis 50 Kohlenstoffatomen ist.

3. Kammpolymere KP gemäß Anspruch 1, wobei der Alkylrest R₁ der Makromonomeren der Formel (I) aus 1 bis 10 Kohlenstoffatomen besteht.

4. Kammpolymere KP gemäß Anspruch 3, wobei der Alkylrest R₁ der Makromonomeren der Formel (I) aus 1 bis 4 Kohlenstoffatomen besteht.

5. Kammpolymere KP gemäß Anspruch 1 herstellbar ausgehend von den Makromonomeren der Formel I, die man mittels eines hydroxylgruppenübertragenden Reagenzes der Formel III
Q - R - OH (III)
worin
Q für eine an die Doppelbindung von B in der Formel I addierende Funktion und R für einen abstandhaltenden inerten organischen Rest mit mindestens zwei und bis 16 Kohlenstoffatomen steht,
in die Verbindung der Formel II-A 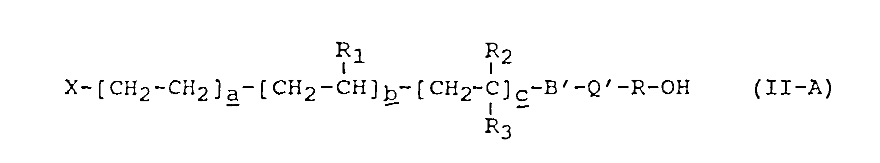
worin , R₁, R₂, R₃, a, b, c die oben bezeichneten Bedeutungen besitzen und -B'-Q'- für eine durch
Anlagerung von Q an B unter Aufhebung der Doppelbindung gebildete Einheit steht,
überführt,
gefolgt von der Acylierung mittels eines, den (Meth)acryloylrest übertragenden Reagenzes MR zum Makromonomeren der Formel IV-A 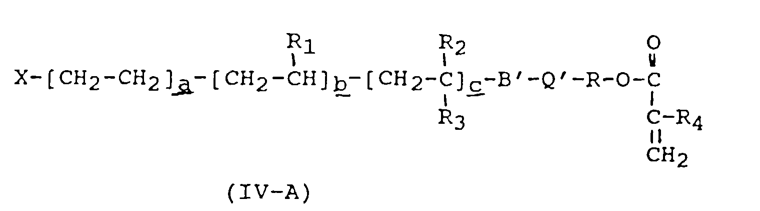
worin X, R₁, R₂, R₃, a, b, c, B', Q' und R die oben bezeichneten Bedeutungen besitzen und
worin R₄ für Wasserstoff oder Methyl steht
und die so erhaltenen Makromonomeren der Formel IV durch radikalische Copolymerisation mit Monomeren M ausgewählt aus der Gruppe bestehend aus (Meth)acrylsäureestern von C₁-C₂₈-Alkanolen, funktionalisierten radikalisch polymerisierbaren Monomeren, Vinylestern von Fettsäuren und vinylaromatischen Monomeren wie Styrol und dessen C₁-C₄-Alkylderivaten zu den Kammpolymeren KP umsetzt, wobei des Gewichtsverhältnis Makromonomer IV zu Monomer M im Bereich 2 zu 98 bis 100 zu 0 und das Molekulargewicht (Mn) der Makromonomeren der Formel IV bei Bestimmung durch Size Exclusion Chromatographie (SEC) im Bereich 500-50000 g/mol liegt.

## Claims

1. Comb polymer KP which may be prepared from macromonomers of formula I 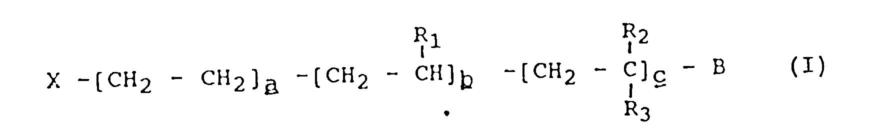 wherein
X is a group originating from the initiator system,
R₁ denotes a C₁₋₁₈-alkyl group,
R₂ and R₃ denote a C₁₋₈-alkyl group and
B denotes an alkene terminal group having at least 2 and up to 12 carbon atoms,
with the proviso that
(1) the characteristic a denotes a molar proportion of 0 mol.-% of the monomers in the macromonomer of formula (I) if the characteristic c denotes a molar proportion of greater than 0 mol.-%;
(2) the sum of the characteristics a plus b is 100 mol.-% of the monomers in the macromonomer of formula (I), whilst a should denote not more than 80 mol.-%, or
(3) the sum of b plus c should denote 100 mol.-% of the monomers in the macromonomer of formula (I),
(4) if a denotes zero, R₁ merges into R₁', where R₁' denotes a C₂₋₁₈-alkyl group,
whilst the compound of formula I is converted, in a manner known *per se,* into a terminally protically substituted compound of formula II 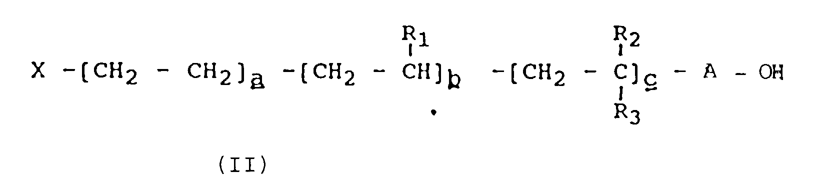 wherein X, R₁, R₂, R₃, a, b and c are as hereinbefore defined and A denotes the group B modified as a result of the introduction of the protic functions, which is acylated by acylation using a reagent MR which transfers the methacryloyl group, to obtain the macromonomer of formula IV 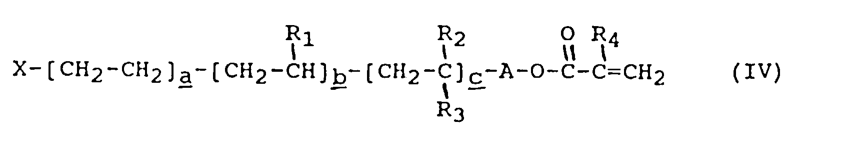 wherein X, R₁, R₂, R₃, A, a, b and c are as hereinbefore defined and R₄ denotes hydrogen or methyl, and the macromonomers of formula IV thus obtained are reacted by radical copolymerisation with monomers M selected from the group consisting of (meth)acrylic acid esters of C₁₋₂₈-alkanols, functionalised, radically polymerisable monomers, vinyl esters of fatty acids and vinyl-aromatic monomers to obtain the comb polymers KP, the weight ratio of macromonomer IV to monomer M being in the range from 2 : 98 to 100 : 0 and the molecular weight (Mn) of the macromonomers of formula IV determined by size exclusion chromatography (SEC) being in the range from 500 - 50000 g/mol.

2. Comb polymer KP according to claim 1, wherein X is an alkyl group having 1 to 50 carbon atoms.

3. Comb polymer KP according to claim 1, wherein the alkyl group R₁ of the macromonomers of formula (I) consists of 1 to 10 carbon atoms.

4. Comb polymer KP according to claim 3, wherein the alkyl group R₁ of the macromonomers of formula (I) consists of 1 to 4 carbon atoms.

5. Comb polymer KP according to claim 1 which may be prepared starting from the macromonomers of formula I, which are converted by means of a hydroxyl group-transferring reagent of formula III
Q - R - OH (III)
wherein
Q denotes a function which adds to the double bond of B in formula I and R denotes an inert organic spacer group having at least two and up to 16 carbon atoms,
into the compound of formula II-A 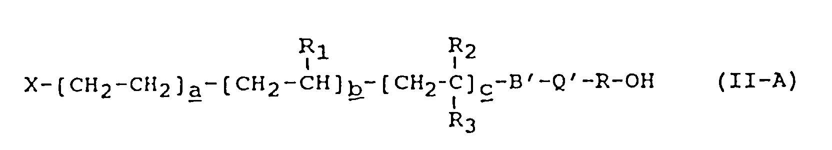 wherein
X, R₁, R₂, R₃ a, b and c are as hereinbefore defined and -B'-Q'- denotes a unit formed by the addition of Q to B with removal of the double bond,
followed by acylation by means of a reagent MR which transfers the (meth)acryloyl group to obtain the macromonomer of formula IV-A 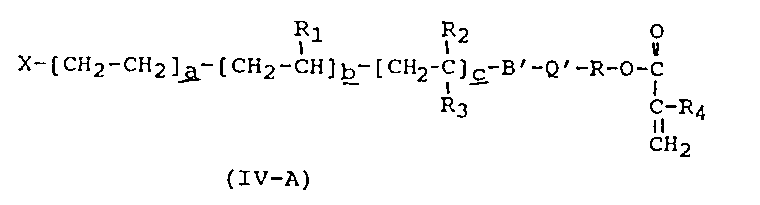
wherein X, R₁, R₂, R₃ a, b, c, B', Q' and R are as hereinbefore defined and
wherein R₄ denotes hydrogen or methyl
and the macromonomers of formula IV thus obtained are reacted by radical copolymerisation with monomers M selected from the group consisting of (meth)acrylic acid esters of C₁₋₂₈-alkanols, functionalised, radically polymerisable monomers, vinyl esters of fatty acids and vinyl-aromatic monomers such as styrene and the C₁₋₄-alkyl derivatives thereof, to obtain the comb polymers KP, the weight ratio of macromonomer VI to monomer M being in the range from 2 : 98 to 100 : 0 and the molecular weight (Mn) of the macromonomers of formula IV determined by size exclusion chromatography (SEC) being in the range from 500 - 50000 g/mol.

## Revendications

1. Polymère à peigne KP pouvant être fabriqué en partant des macromonomères de la formule I, 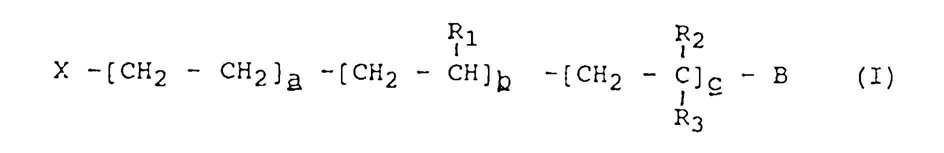 dans laquelle :
X est un radical provenant du système initiateur
R₁ est un radical alkyle ayant de 1 à 18 atomes de carbone
R₂ et R₃ étant des radicaux alkyle ayant de 1 à 8 atomes de carbone
B étant un groupe final alcène ayant au moins 2 jusqu'à 12 atomes de carbone,
avec la condition selon laquelle
(1) la caractéristique a vaut pour une fraction molaire de 0 % mole des monomères dans le macromonomère de formule (I) lorsque l'indice c signifie une fraction molaire supérieure à 0 % mole.
(2) la somme des indices a plus b est de 100 % mole des monomères dans le macromonomère de formule (I), a devant être au plus de 80 % mole, ou
(3) la somme de b plus c devant être de 100 % mole des monomères dans le macromonomère de formule (I),
(4) Lorsque a vaut zéro, R₁ se transforme en R'₁, R'₁ étant un radical alkyle ayant de 2 à 18 atomes de carbone
le composé de la formule I se transformant, de manière connue en soi, en une combinaison, substituée de façon protique à une extrémité, de formule II 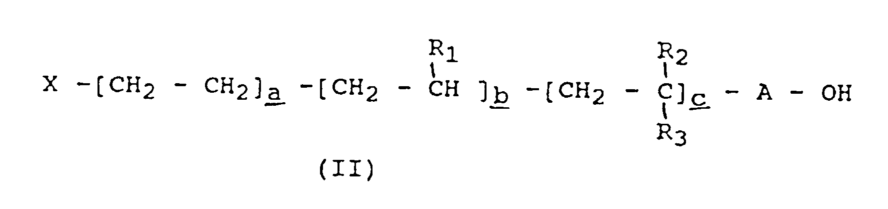 dans laquelle X, R₁, R₂, R₃, a, b et c ont les significations indiquées ci-dessus et A est, par suite de l'introduction des fonctions protiques, un groupe B modifié, qui est acylé par acylation au moyen d'un réactant MR transmettant le radical méthacryloyle aux macromonomères de formule IV 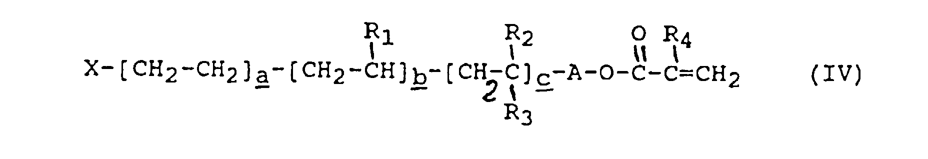 dans laquelle X, R₁, R₂, R₃, A, a, b et c ont les significations indiquées ci-dessus et R₄ étant l'hydrogène ou le radical méthyle, et les macromonomères ainsi obtenus de formule IV étant sélectionnés par copolymérisation radicalique avec des monomères M issus du groupe constitué des esters d'acide (méth)acrylique des alcanols en C₁-C₂₈, des monomères fonctionnalisés, polymérisables radicaliquement, des vinyle esters d'acide gras et des monomères vinyles aromatiques convertis en des polymères à peignes KP, le rapport de poids entre le macromonomère IV et le macromonomère M étant dans la plage de 2 pour 98 jsuqu'à 100 pour 0, et le poids moléculaire (Mn) des macromonomères de formule IV, lors d'une détermination par chromatographie par exclusion de taille (CET), étant situé dans la plage 500-50 000 g/mol.

2. Polymère à peigne KP selon la revendication 1, dans lequel
X est un radical alkyl comportant de 1 à 50 atomes de carbone.

3. Polymère à peigne KP selon la revendication 1,
dans lequel
le radical alkyl R₁ des macromonomères de formule I est constitué de 1 à 10 atomes de carbone.

4. Polymère à peigne KP selon la revendication 3,
le radical alkyl R1 des macromonomères de formule I étant constitué de 1 à 4 atomes de carbone.

5. Polymère à peigne KP selon la revendication 1,
pouvant être fabriqué en partant des macromonomères de la formule I, qui est transformé, au moyen d'un réactant de formule III, transmettant les groupes hydroxyl,
**Q - R - OH (III)**
dans laquelle Q est une fonction ajoutant à la liaison double de B dans la formule I et R étant un radical organique inerte assurant un espacement avec au moins Z et jusqu'à 16 atomes de carbones,
dans le composé de formule II-A : 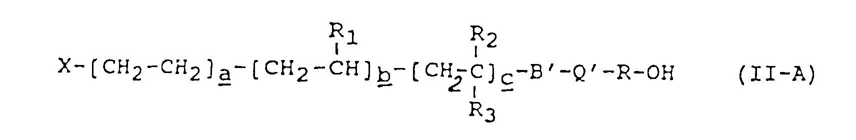
dans laquelle X, R₁, R₂, R₃, a, b et c ont les significations indiquées ci-dessus et -B'-Q'- étant une unité constituée par agrégation de Q à B et supprimant la liaison double,
suivi par l'acylation, faite au moyen d'un réactant MR transmettant le radical (méth)acryloyl, pour donner des macromonomères de formule IV-A 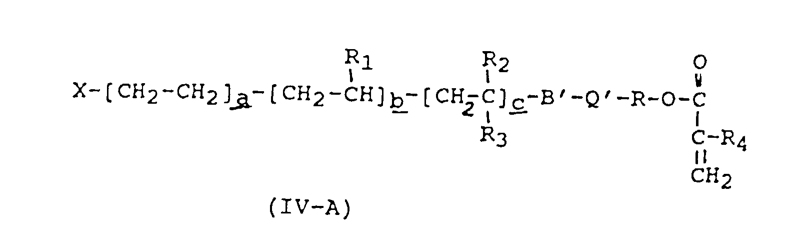 dans laquelle X, R₁, R₂, R₃, a, b, c, B', Q' et R ont les significations indiquées ci-dessus, et
R₄ est l'hydrogène ou un radical méthyle, et les macromonomères de formule IV ainsi obtenus étant convertis, par copolymérisation radicalique avec des monomères M sélectionnés dans le groupe des esters d'acide (méth)acrylique issus d'alcanols en C₁- C₂₈, de monomères, de
vinyl esters d'acide gras et monomères vinyl-aromatiques tels que le styrène et ses dérivés en C₁-C₄, polymérisables radicaliquement, en donnant les polymères à peigne KP, le rapport de poids entre le macromonomère IV et le macromonomère M étant dans la plage de 2 pour 98 à 100 pour 0 et le poids moléculaire (Mn) des macromonomères de la formule IV étant situé, lors de la détermination par Chromatographie à Exclusion de Taille (CET), dans la plage 500-50 000 g/mol.
